# EUROPÄISCHE PATENTSCHRIFT

(11) **EP 2 660 043 B1**
(45) Veröffentlichungstag und Bekanntmachung des Hinweises auf die Patenterteilung: **03.03.2021**
(21) Anmeldenummer: 12166843.8
(22) Anmeldetag: 04.05.2012
(51) Int. Cl.: B32B 15/01, C22C 21/00, C22C 21/02, B23K 20/233, F28F 21/08

(54) **Verwendung eines Aluminiumverbundwerkstoffes für das flussmittelfreie Löten**
Use of an aluminium clad sheet for fluxless brazing
Utilisation d'une produit plaquée en aluminium pour le brassage sans flux

(43) Veröffentlichungstag der Anmeldung: 06.11.2013
(73) Patentinhaber: Hydro Aluminium Rolled Products GmbH, 41515 Grevenbroich (DE)
(72) Erfinder: Eckhard, Kathrin, 50969 Köln (DE); Schwarz, Jochen, 41849 Wassenberg (DE); Güßgen, Olaf, 50931 Köln (DE); Sicking, Raimund, 47506 Neukirchen-Vluyn (DE); Janssen, Hartmut, 40724 Hilden (DE)
(74) Vertreter: Cohausz & Florack

(56) Entgegenhaltungen:
- JP-A- 4 100 674
- JP-A- 4 100 696
- JP-A- 5 154 693
- US-A- 5 102 033

## Beschreibung

Die Erfindung betrifft die Verwendung eines Aluminiumverbundwerkstoff zum flussmittelfreien Löten bestehend aus mindestens einer Aluminiumkernlegierung und mindestens einer ein- oder beidseitig auf der Aluminiumkernlegierung vorgesehenen, äußeren Lotschicht bestehend aus einer Aluminiumlotlegierung.

Aluminiumverbundwerkstoffe, bestehend aus mindestens einer Aluminiumkernlegierung und mindestens einer ein- oder beidseitig auf der Aluminiumkernlegierung angeordneten Aluminiumlotschicht, werden zur Herstellung von gelöteten Konstruktionen verwendet. Häufig weisen diese eine Vielzahl von Lötstellen auf, wie dies beispielsweise bei Wärmetauschern der Fall ist. Dabei werden zum Löten von Metallbauteilen verschiedene Lötverfahren eingesetzt. Eines der häufigsten Verfahren ist das sogenannte "Controlled Atmosphere Brazing"-(CAB)-Lötverfahren, bei welchem die Aluminiumbauteile in der Regel unter Verwendung von Flussmitteln gelötet werden und während des Lötvorganges einer genau kontrollierten Atmosphäre, beispielweise einer Stickstoffatmosphäre ausgesetzt sind. Der Einsatz von korrosiven oder nicht korrosiven Flussmitteln birgt allerdings Nachteile, beispielsweise erhöhte Anlagenkosten und technische Probleme bei der Wechselwirkung von Resten des Flussmittels mit beispielsweise Kühlmittelzusätzen in einem Wärmetauscher. Darüber hinaus ist die Verwendung der Chemikalien auch in Bezug auf die Vermeidung von Umweltbelastungen problematisch. Das zweite Verfahren, welches häufig angewendet wird, ist das Vakuumlöten, bei welchem die zu lötenden Bauteile in einer Atmosphäre mit sehr niedrigem Druck, beispielsweise etwa einmal 10⁻⁵ mbar oder weniger gelötet werden. Das Vakuumlöten kann ohne Flussmittel erfolgen, wobei allerdings dem Aluminiumlot oft ein bestimmter Anteil von Magnesium zugefügt wird, um ein besseres Lötergebnis zu erhalten. Aus der internationalen Patentanmeldung WO 2010/000666 A1 ist darüber hinaus ein Verfahren zum flussmittelfreien Löten mit dem CAB-Lötverfahren bekannt, bei welchem die Aluminiumlotschicht aus einer ersten Aluminiumlotschicht und einer zweiten Aluminiumlotschicht besteht. Die zweite Aluminium-Lotschicht besteht aus einer Al-Si Aluminiumlegierung, welche neben 5 Gew.-% - 20 Gew.-% Silizium auch 0,01 Gew.-% - 3 Gew.-% Magnesium enthält. Die erste Aluminiumlotschicht enthält dagegen 2 - 14 Gew.-% Silizium und weniger als 0,4 Gew.-% Magnesium. Der zweischichtige Aufbau der Aluminiumlotschicht ist allerdings insofern nachteilig als dass bei der Herstellung der zweischichtigen Aluminiumlotschicht höhere Kosten anfallen.

Aus den japanischen Veröffentlichungen JP 04-1000696, JP 04-100674 sowie der JP 05-154693 ist die Verwendung eines alkalisch gebeizten Aluminiumverbundwerkstoffes in einem Vakuumlötverfahren oder mit Flussmitteln in einem CAB-Lötverfahren bekannt. Dabei werden im Vakuumlötverfahren die magnesiumhaltigen Aluminiumlotlegierungen JIS 4004 und JIS 4104 verwendet und beim CAB-Löten mit Flussmittel die im Wesentlichen magnesiumfreien Aluminiumlotlegierungen JIS 4343 sowie JIS 4045.

Zudem offenbart die US 5,102,033 die Verwendung eines sauer gebeizten Aluminiumverbundwerkstoffes in einem Vakuumlöten.

Die US 2007/0204935 A1 betrifft ein Verfahren zum flussmittelfreien Löten von Aluminiumlegierungsprodukten, wobei die Oberfläche der Produkte über eine alkalische Tauchbehandlung und das Erzeugen einer Konversionsschicht vorbehandelt wird.

Aus dem Fachbuch "Principles of Brazing", D. Jacobson und G Humpson, ASM International 2005 ist bekannt, Aluminiumverbundwerkstoffe mit Lotschichten unmittelbar vor dem Löten einer alkalischen Beize zu unterziehen. Bei Lagerung der Aluminiumverbundwerkstoffe wird jedoch eine Versiegelung der Lotschicht vorgeschlagen, um gute Löteigenschaften bereitzustellen.

Von diesem Stand der Technik ausgehend liegt der vorliegenden Erfindung die Aufgabe zugrunde, die Verwendung eines Aluminiumverbundwerkstoff vorzugschlagen, welcher auf einfache Weise ohne die Verwendung von Flussmitteln auch mit dem CAB-Verfahren gelötet werden kann und gleichzeitig kostengünstig und einfach herstellbar ist.

Die zuvor aufgeführte Aufgabe wird gemäß einer ersten Lehre der vorliegenden Erfindung durch die Verwendung eines Aluminiumverbundwerkstoffs gemäß Patentanspruch 1 gelöst.

Es hat sich gezeigt, dass nach einem alkalischen Beizen der Oberfläche der Aluminiumlotschicht die Löteigenschaften des Aluminiumverbundwerkstoffs sich drastisch ändern können. Der erfindungsgemäße Aluminiumverbundwerkstoff kann nämlich ohne die Verwendung von Flussmitteln im CAB-Verfahren gelötet werden, wie umfangreiche Löttests gezeigt haben. Das Beizen führt auf der Aluminiumoberfläche einerseits zu einer Entfernung der Aluminiumoxidschicht, welche sich bei der Herstellung des Aluminiumverbundwerkstoffes gebildet hat. Es bildet sich danach eine neue natürliche Oxidschicht aus, welche deutlich dünner ist, als die beim Fertigungsprozess des Aluminiumverbundwerkstoffs gebildete Oxidschicht. Zudem wird durch das Beizen eine Anreicherung an Silizium in der Oberfläche erreicht und die Oberfläche mit einer Anzahl von geätzten Vertiefungen versehen. Alle drei Effekte werden als Ursache für das sehr gute Lötverhalten des erfindungsgemäßen Aluminiumverbundwerkstoffes angesehen.

Wie Rasterelektronenmikroskopaufnahmen zeigen, können bei intensiver Beize auch Siliziumpartikel auf der Aluminiumlotschicht freigelegt werden, so dass es zu einer starken Anreicherung an Silizium unmittelbar an der Oberfläche kommt. Der erfindungsgemäße Aluminiumverbundwerkstoff benötigt nicht den aus dem Stand der Technik bekannten, komplexen Aluminiumlotschichtaufbau, um ein flussmittelfreies Löten zu ermöglichen und kann damit kostengünstiger bereitgestellt werden.

Gemäß einer ersten Ausgestaltung der Erfindung ist die Oberfläche der
Aluminiumlotschicht zusätzlich vor oder während des Beizens entfettet worden. Die Entfettung kann beispielsweise durch eine Glühung erfolgen. Allerdings ist auch die Verwendung eines Entfettungsmediums denkbar. Die entfettete Oberfläche der Aluminiumlotschicht des Aluminiumverbundwerkstoffs ermöglicht einen verbesserten Beizangriff und damit ein verbessertes Lötverhalten ohne Flussmittel.

Wie bereits zuvor ausgeführt, ist es gemäß einer nächsten Ausgestaltung der vorliegenden Erfindung vorteilhaft, dass die gebeizte Oberfläche der Aluminiumlotschicht zumindest teilweise freiliegende oder freiliegende Siliziumpartikel aufweist. Hier entstehen lokal höhere Siliziumkonzentrationen, welche in Abhängigkeit der Lotzusammensetzung zu einem lokal engeren Schmelzbereich führen können. Die Siliziumpartikel schmelzen mit der umgebenden Aluminiummatrix und begünstigen insofern das Flüssigwerden des restlichen Aluminiumlots. Die Benetzungseigenschaften der Aluminiumlotschicht sind sehr komplex und im Detail noch nicht verstanden. Durch umfangreiche Versuche konnte jedoch festgestellt werden, dass zumindest teilweise freiliegende Siliziumpartikel die Benetzungseigenschaften der Aluminiumlotschicht verbessern können.

Gemäß einer weiteren Ausgestaltung der Erfindung ist als Aluminiumkernlegierung eine Aluminiumlegierung vom Typ AA lxxx, AA 2xxx, AA3xxx, AA 5xxx oder AA 6xxx vorgesehen. Die Aluminiumlegierung der genannten Typen weisen in der Regel die mechanischen Eigenschaften auf, welche für den Einsatz beispielsweise als Wärmetauscher oder in anderen Anwendungsgebieten für gelötete Konstruktionen erforderlich sind. Für Wärmetauscher werden besonders bevorzugt Aluminiumlegierungen vom Typ AA 3xxx verwendet, da diese entsprechend niedrig legiert, kostengünstig und korrosionsbeständig sind.

Aluminiumlotlegierungen können die folgende Zusammensetzung in Gew.-% aufweisen:
6,5 % ≤ Si ≤ 15 %,
Fe ≤ 1 %,
Cu ≤ 0,3 %,
Mg ≤ 2,0 %,
Mn ≤ 0,15 %,
Zn ≤ 0, 15 %,
Ti ≤ 0,30 %,

Rest Al und unvermeidbare Verunreinigungen einzeln maximal 0,05 %, in Summe maximal 0,15 %.

Als Aluminiumlotlegierungen werden die Aluminiumlegierungen vom Typ AA 4343 oder AA 4045 oder AA 4047 verwendet. Allen Aluminiumlotlegierungen, welche die oben genannte Spezifikation erfüllen, ist gemein, dass diese einen niedrigeren Schmelzpunkt als die Aluminiumkernlegierung aufweisen, so dass beim Erhitzen des zu lötenden Bauteils auf eine Temperatur unterhalb der Solidustemperatur der Kernlegierung die Aluminiumlotschicht flüssig bzw. teilweise flüssig wird. Die Aluminiumkernlegierung schmilzt nicht auf. Die Si-Gehalte der Aluminiumlotlegierung liegen bevorzugt zwischen 6,5 Gew.-% und 15 Gew.-%.

Gemäß einer weiteren Ausgestaltung der Erfindung ist der Verbundwerkstoff vor dem Beizen weich, rückgeglüht oder walzhart, damit die mechanischen Eigenschaften, welche in der Anwendung später erfordert werden, gewährleistet sind.

Ein wirtschaftlich in großem Maßstabe herstellbarer Aluminiumverbundwerkstoff kann dadurch verwendet werden, dass der Aluminiumverbundwerkstoff durch simultanes Gießen oder Walzplattieren hergestellt worden ist. Alternativ zum simultanen Gießen oder Walzplattieren besteht auch die Möglichkeit, die Aluminiumlotschicht durch thermisches Spritzen aufzubringen. Die beiden zuerst genannten Verfahren sind allerdings diejenigen, welche in großem Umfange industriell eingesetzt werden.

Gemäß der vorliegenden Erfindung wird die oben aufgezeigte Aufgabe durch die Verwendung eines bandförmigen Aluminiumverbundwerkstoffs bestehend aus mindestens einer Aluminiumkernlegierung und mindestens einer ein- oder beidseitig auf der Aluminiumkernlegierung vorgesehenen, äußeren Aluminiumlotschicht, welcher durch Walzplattieren oder simultanes Gießen und anschließendes Walzen zu einem bandförmigen Aluminiumverbundwerkstoff hergestellt wird, dadurch gelöst, dass die Lotschicht des Aluminiumverbundwerkstoffes einer alkalischen Beize unterzogen wird. Wie bereits zuvor ausgeführt, haben die Erfinder überraschenderweise festgestellt, dass durch die alkalische oder saure Beize die Löteigenschaften insbesondere beim flussmittelfreien Löten deutlich verbessert werden können, so dass beim CAB-Löten auf den Einsatz eines Flussmittels verzichtet werden kann.

Die alkalische Beize weist Natronlauge mit einer Konzentration von 0,2 - 5 Gew.-% auf. Es hat sich gezeigt, dass mit den genannten Konzentrationen ein ausreichendes Beizen der Oberfläche der Aluminiumlotschicht durchgeführt werden kann, so dass auf einfache Weise ein Aluminiumverbundwerkstoff zum flussmittelfreien Löten bereitgestellt werden kann. Neben Natronlauge kann auch eine saure Beize beispielsweise unter Verwendung von Salpetersäure oder Phosphorsäure zum Beizen der Oberfläche verwendet werden.

Bevorzugt wird der Aluminiumverbundwerkstoff vor dem Beizen oder während des Beizens mit einem Entfettungsmedium entfettet. Die Entfettung vor dem Beizen kann auch durch eine Glühung erfolgen, während die Entfettung während des Beizens bevorzugt mit einem Entfettungsmedium erfolgt.

Das Beizen der Aluminiumlotschicht erfolgt bevorzugt in-line mit dem letzten Kaltwalzschritt, so dass ein möglichst wirtschaftlicher Herstellprozess bereitgestellt werden kann. Der Aluminiumverbundwerkstoff kann aber auch vor dem Beizen in einem Durchlaufofen rück- oder weich geglüht werden. Damit kann ein für die Herstellung von Wärmetauschern optimiertes Coil eines bandförmigen Aluminiumverbundwerkstoffs auf hoch wirtschaftliche Weise bereitgestellt werden. Denkbar ist aber auch die Verwendung eines Coil-to-Coil-Fertigungsschrittes der unabhängig von anderen Herstellschritten durchgeführt wird.

Ferner kann der fertig gewalzte Aluminiumverbundwerkstoff auch in einem Kammerofen in Coilform geglüht und anschließend der Oberflächenbeize zugeführt werden. Auch diese Verfahren sind ökonomisch günstig, da beispielsweise hohe Investitionskosten für Durchlauföfen nicht entstehen.

Gemäß einer weiteren Ausgestaltung enthält das Entfettungsmedium mindestens 0,5 - 3 Gew.-% eines Gemisches aus 5 - 40 Gew.-% Natriumtripolyphosphat, 3 - 10 Gew.-% Natriumgluconat, 3 - 8 Gew.-% nicht ionischer und anionischer Tenside, optional 0,5 - 70 Gew.-% Natriumkarbonat, bevorzugt 30 - 70 Gew.-% Natriumkarbonat. Die genannte Zusammensetzung des Entfettungsmediums hat insbesondere in Verbindung mit einer alkalischen Beize, welche Natronlauge bevorzugt enthält, zu sehr guten Lötergebnissen geführt. Das genannte Entfettungsmedium kann vor der Anwendung der Beize oder gemeinsam mit der Beize angewendet werden und hinterlässt eine im CAB-Verfahren ohne Flussmittel sehr gut lötbare Oberfläche der Aluminiumlotschicht.

Um den Aluminiumverbundwerkstoff für die spätere Anwendung vorzubereiten ist es vorteilhaft, dass der Aluminiumverbundwerkstoff vor dem Beizen weich- oder rückgeglüht wird. Hier können die mechanischen Eigenschaften auf einfache Weise durch einen Glühprozess eingestellt werden.

Bevorzugt beträgt die Verweildauer der Aluminiumlotschicht des Aluminiumverbundwerkstoffs in der Beize 1 - 20 s, bevorzugt 2 - 8 s. Diese Verweildauer ermöglicht einen ausreichenden Angriff Oberfläche der Aluminiumlotschicht durch die Beize, um dort Silizium anzureichern oder auch um Siliziumpartikel freizulegen.

Die Reaktion der Beize mit der Aluminiumlotschicht kann dadurch weiter verbessert werden, dass die Temperatur der Beize 65°C - 80°C beträgt. Insbesondere kann bei einer erhöhten Temperatur die Prozessgeschwindigkeit gesteigert werden.

Vorzugsweise kann eine saure Spülung unter Verwendung einer Salpetersäure oder einer Schwefelsäure erfolgen, so dass Beizreste vom bandförmigen Aluminiumverbundwerkstoff entfernt werden können.

Gemäß der vorliegenden Erfindung wird durch die erfindungsgemäße Verwendung eine gelötete Konstruktion umfassend mindestens ein umgeformtes oder nicht umgeformtes Blech oder Rohr bestehend aus einem erfindungsgemäßen Aluminiumverbundwerkstoff hergestellt. Eine solche gelötete Konstruktion ist beispielsweise ein Wärmetauscher. Die Vorteile der gelöteten Konstruktion liegen darin, dass der erfindungsgemäße Aluminiumverbundwerkstoff ein flussmittelfreies Löten unter Verwendung des CAB-Lötverfahrens ermöglicht. Dadurch, dass keine Flussmittelrückstände mehr vorhanden sind und gleichzeitig kein kostenintensives Vakuumlöten verwendet werden muss, kann das gelötete Bauteil mit besserer Langlebigkeit bei geringeren Herstellkosten bereitgestellt werden.

Im Weiteren soll die Erfindung anhand von Ausführungsbeispielen in Verbindung mit der Zeichnung näher erläutert werden. In der Zeichnung zeigt:
- Fig. 1: eine perspektivische Darstellung einer Lötversuchsanordnung zum Nachweis der Lötbarkeit des Aluminiumverbundwerkstoffs,
- Fig. 2: eine Schnittansicht entlang der Längsachse der Lötversuchsanordnung aus Fig. 1,
- Fig. 3: ein Lötversuchsergebnis unter Verwendung eines konventionellen Aluminiumverbundwerkstoffs,
- Fig. 4 a) bis c): Lötversuchsergebnisse für drei verschiedene Ausführungsbeispiele eines erfindungsgemäßen Aluminiumverbundwerkstoffs,
- Fig. 5: eine Rasterelektronenmikroskopaufnahme der Oberfläche des Aluminiumverbundwerkstoffs aus Fig. 3 vor dem Löten,
- Fig. 6a) bis c): Rasterelektronenmikroskopaufnahmen der Oberfläche der Ausführungsbeipsiele aus Fig. 4a) bis c) vor dem Löten und
- Fig. 7: ein Ausführungsbeispiel einer gelöteten Konstruktion, welche den erfindungsgemäßen Aluminiumverbundwerkstoff aufweist.

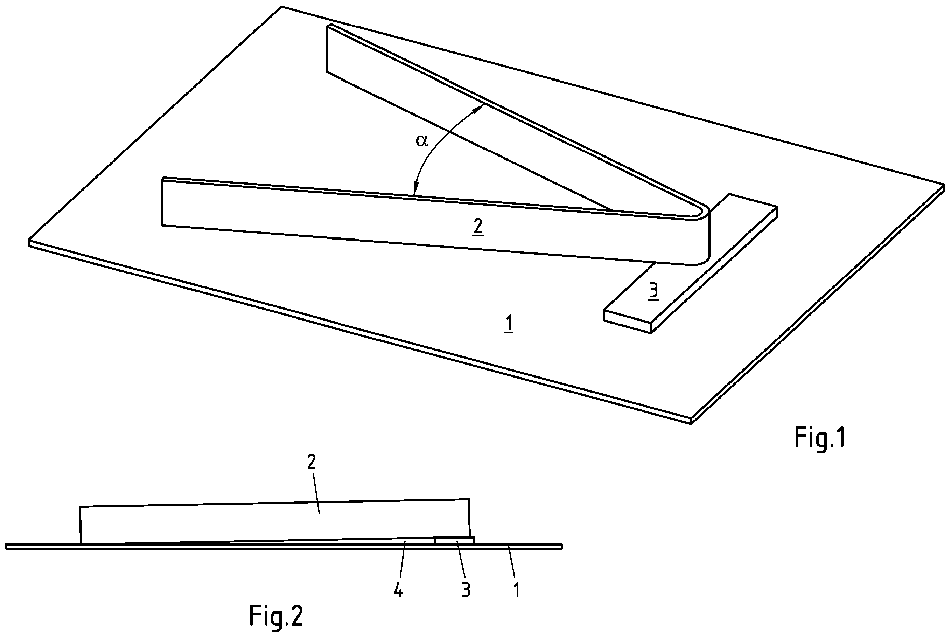

Die Löteigenschaften des erfindungsgemäß verwendeten Aluminiumverbundwerkstoffs wurden unter Verwendung eines flussmittelfreien CAB-Lötverfahrens mit einer spezifischen Lötversuchsanordnung, wie sie in Fig. 1 dargestellt ist, überprüft. Die Lötversuchsanordnung besteht aus insgesamt drei Teilen. Einem Blech 1, einem Winkelblech 2 und einem Auflageblech 3 für das Winkelblech 2. Das Winkelblech 2 liegt mit seinem geschlossenen Ende 2a auf dem auf Blech 1 angeordneten Auflageblech 3 auf. Beide Schenkelenden 2b dagegen liegen auf dem Blech 1 auf. Wie in Fig. 2 in einer Schnittansicht dargestellt, entsteht so ein sich verändernder Spalt von dem Auflagepunkt der Schenkelenden 2b des Winkelblechs 2 bis zum Auflagepunkt des geschlossenen Endes 2a auf dem Auflageblech 3. Durch den größer werdenden Lötspalt besteht die Möglichkeit zu beurteilen, wie gut die Löteigenschaften des Bleches 1 sind. Wird beispielsweise der größer werdende Spalt 4 zu einem großen Teil gefüllt, ist von einem sehr guten Lötverhalten bei den spezifischen Verfahrensparametern auszugehen.

Das Blech 1 besteht im vorliegenden Ausführungsbeispiel aus einem Aluminiumverbundwerkstoff mit einer walzplattierten Aluminiumlotschicht. Die im Versuch verwendeten Blechdicken lagen zwischen bei 0,5 mm und 1 mm. Die Länge des Blechs 1 beträgt 70 mm und die Breite 50 mm. Die Länge der Schenkel des Winkels 2 beträgt jeweils 50 mm. Das Winkelblech 2 besitzt einen Öffnungswinkel von 35°. Das Auflageblech 3 hat eine Dicke von 1 mm, so dass der Höhenunterschied von dem geschlossenen Ende des Winkelblechs bis zum Schenkelende von 1 mm besteht. Die Dicke des Winkelblechs 2 beträgt 0,6 mm. Das Winkelblech 2 ist nicht mit einer Aluminiumlotschicht ausgestattet.

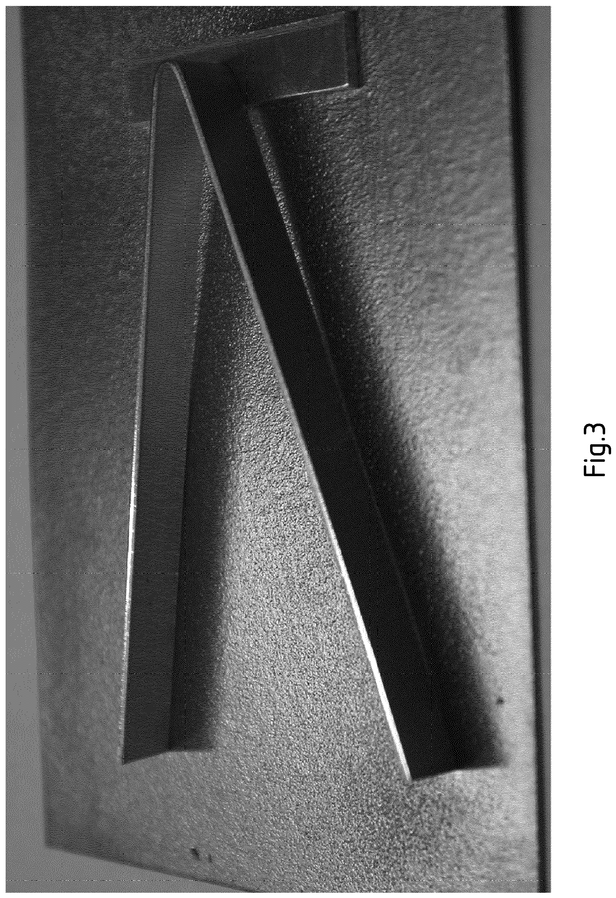

In Fig. 3 ist das Lötergebnis eines konventionellen Aluminiumverbundwerkstoffs gezeigt. Der Aluminiumverbundwerkstoff mit einer Kernschicht aus einer Aluminiumlegierung vom Typ AA 3003 wies eine Gesamtdicke von 0,5 mm auf und war beidseitig mit einem AlSilO-Aluminiumlot (AA 4045) plattiert. Die Plattierschichtdicke betrug je Seite 11,5 % der Gesamtdicke. Insofern ergab sich eine Plattierschichtdicke von jeweils etwa 0,0575 mm. Die Lötung erfolgte nach einer Aufheizphase bei einer Temperatur von 600 °C, wobei die Löttemperatur für 4 Minuten gehalten wurde. Die Lötung erfolgte ohne Flussmittel in einer Stickstoffatmosphäre. Wie aus Fig. 3 zu erkennen ist, zeigte sich nach dem Löten keine Füllung des Spaltes zwischen dem Winkelblech und Verbundwerkstoff, so dass keine Lötverbindung erzeugt werden konnte. Dieses Ergebnis war nicht überraschend, da aufgrund des einfachen Aufbaus des Aluminiumverbundwerkstoffs eine flussmittelfreie Lötung nicht erwartet wurde.

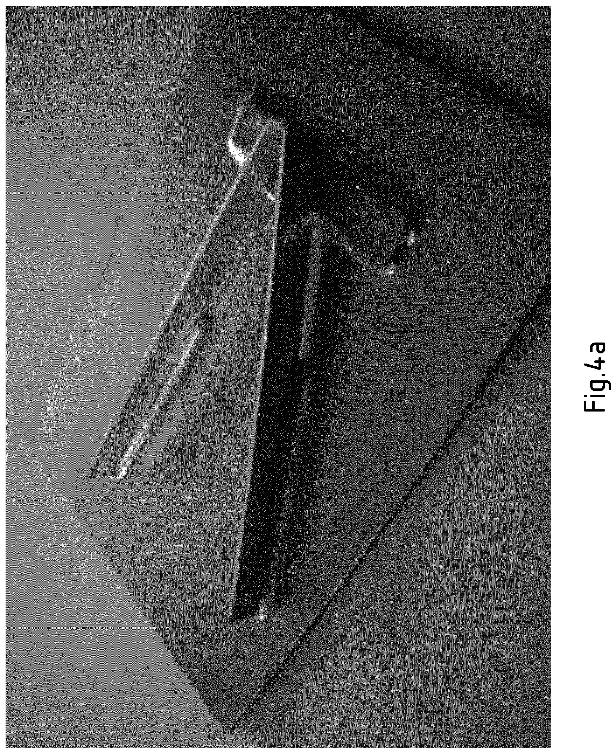

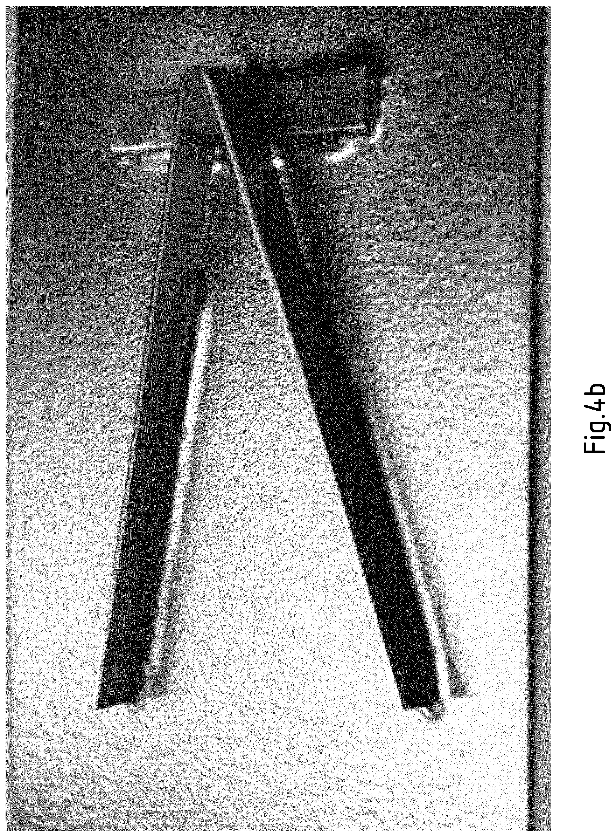

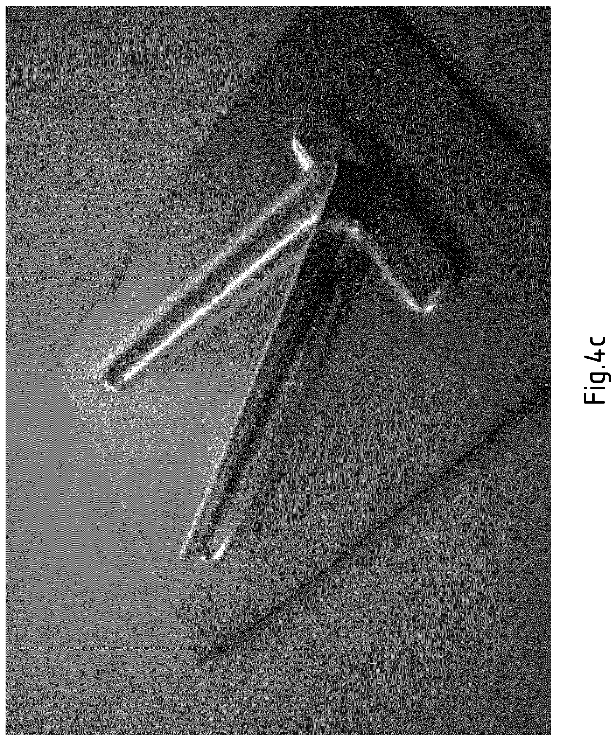

Im Unterschied dazu zeigen Fig. 4a) bis 4c) die Lötergebnisse unter Verwendung eines erfindungsgemäßen Aluminiumverbundwerkstoffs mit gebeizter, hier alkalisch gebeizter Aluminiumlotschichtoberfläche. Die Gesamtdicke der verwendeten Aluminiumverbundwerkstoffe betrug für die in Fig. 4a) und 4c) dargestellten Ausführungsbeispiele 1 mm mit einer beiseitigen Plattierschichtdicke von 15 % bzw. 0,15 mm. Das Ausführungsbeispiel aus Fig. 4a) war mit einer AlSi7,5- und das Ausführungsbeispiel aus Fig. 4 c) mit einer AlSil2-Aluminiumlotschicht plattiert. Als Aluminiumkernlegierung wurde eine Legierung vom Typ AA 3003 verwendet. Das Ausführungsbeispiel aus Fig. 4b) entsprach exakt dem der Fig. 3 mit dem Unterschied, dass das Ausführungsbeispiel aus Fig. 4b), wie auch die erfindungsgemäßen Ausführungsbeispiele 4a) und 4c) eine alkalische gebeizte Oberfläche aufweist.

Eindrucksvoll ist zu erkennen, dass die Aluminiumlotschicht im Bereich der Auflagepunkte des Blechwinkels und darüber hinaus entlang. mindestens etwa 2/3 der Schenkellängen eine Lötverbindung hergestellt hat. Deutlich ist zu erkennen, dass das auf dem Aluminiumverbundwerkstoff vorhandene Aluminiumlot aufgeschmolzen und eine Lötverbindung mit dem Winkelblech auch in Bereichen mit relativ großem Spalt erzeugt hat. Lediglich die Bereiche mit extrem hoher Spaltbreite in der Nähe der Auflage des geschlossenen Endes des Blechwinkels wurden nicht gelötet. Zusätzlich ist zu erkennen, dass mit zunehmendem Si-Anteil in der Aluminiumlotschicht eine verbesserte Spaltfüllung erzielt wird. Es zeigt sich, dass mit den erfindungsgemäßen Aluminiumverbundwerkstoffen mit gebeizter Oberfläche auf die Verwendung von Flussmitteln beim CAB-Lötverfahren verzichtet werden kann.

Die getesteten Aluminiumverbundwerkstoffe waren walzplattiert. Identische Ergebnisse werden aber auch für durch simultanes Gießen oder thermisches Spritzen erzeugte Aluminiumverbundwerkstoffe erwartet.

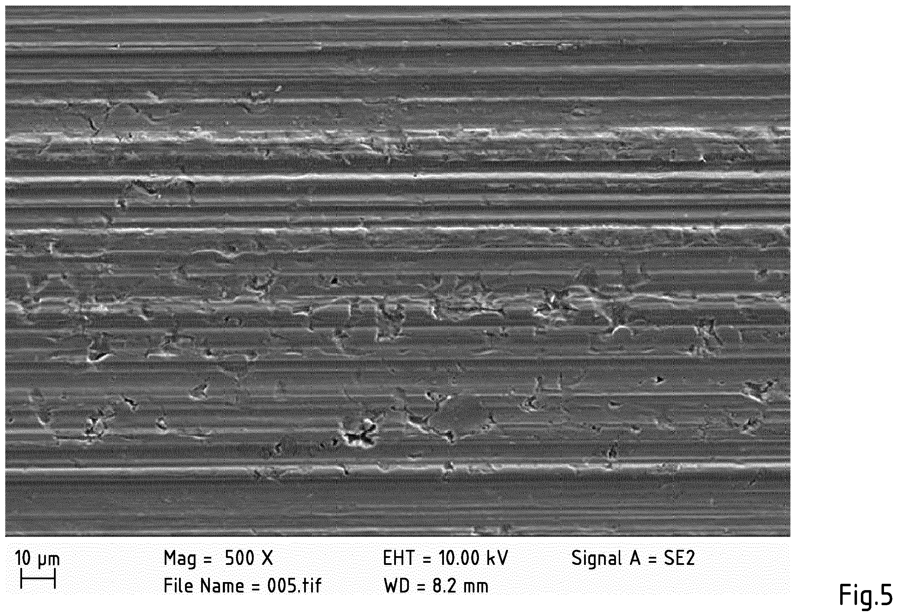

In Fig. 5 ist eine Rasterelektronenmikroskop(REM)-Aufnahme der Oberfläche des Ausführungsbeispiels eines walzplattierten, konventionellen Aluminiumverbundwerkstoffs aus Fig. 3 dargestellt, bevor dieser zur Lötung verwendet wurde. Der dargestellte Aluminiumverbundwerkstoff ist einer Glühung unterzogen worden, um den Aluminiumverbundwerkstoff wieder in den Zustand weich zu versetzen. In Fig. 5 ist deutlich zu erkennen, dass die Oberfläche glatt ist, keine Siliziumpartikel an der Oberfläche aufweist und eine normale Walzstruktur besitzt.

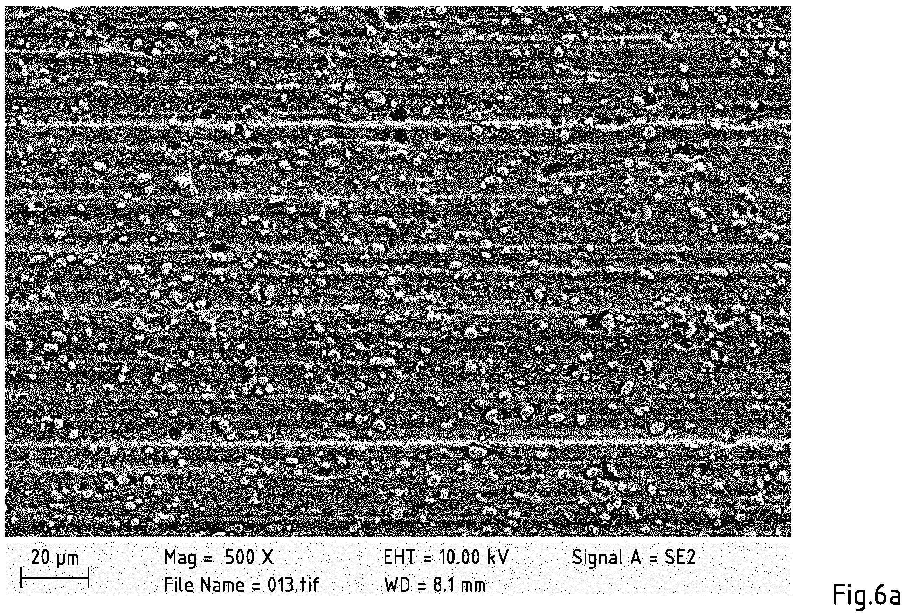

Fig. 6a) bis 6c) zeigen die Aluminiumverbundwerkstoffe der Fig. 5a) bis 5c) nach dem Beizen der Oberfläche in REM-Aufnahmen. Die Bleche aus Fig. 6a) und 6c) wurden einer manuellen Beize durch Tauchen im Labor unterzogen, wobei eine Natronlauge in einer Konzentration von 1 Gew.-% mit einer Kontaktzeit von etwa 3 Minuten bei 60 °C Beizetemperatur verwendet wurde. Die lange Beizzeit wurde gewählt, um einen ähnlich Beizangriff zu erzielen, wie er in der Fertigung durch ein Spritzverfahren erzielt wird. Mit der Beize wurde gleichzeitig ein Entfettungsmedium in einer Konzentration von 1 Gew.-% eines Gemisches aus 5 - 40 Gew.-% Natriumtripolyphosphat, 3 - 10 Gew.-% Natriumgluconat, 3 - 8 Gew.-% nichtionischer und anionischer Tenside verwendet. Nach dem Beizen wurde in einer 1%-igen Salpetersäure dekapiert.

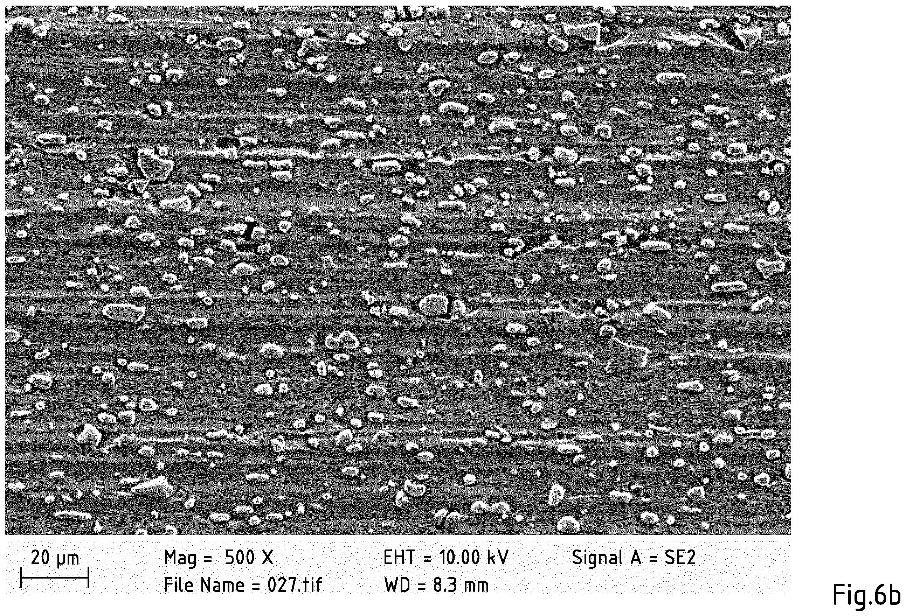

Das Ausführungsbeispiel aus Fig. 6b) entstammt einem Coil-to-Coil-Fertigungsschritt, welcher Entfettung- und Beizschritt gleichzeitig beinhaltete und wobei das Beiz- und Entfettungsmedium aufgespritzt wird. Neben 1,5 Gew.-% Natronlauge enthielt das Entfettungsmedium 1 Gew.-% eines Gemisches aus 5 - 40 Gew.-% Natriumtripolyphosphat, 3 - 10 Gew.-% Natriumgluconat, 3 - 8 Gew.-% nichtionischer und anionischer Tenside. Die Kontaktzeit betrug 2 bis 8 s bei einer Beizetemperatur von 75 °C.

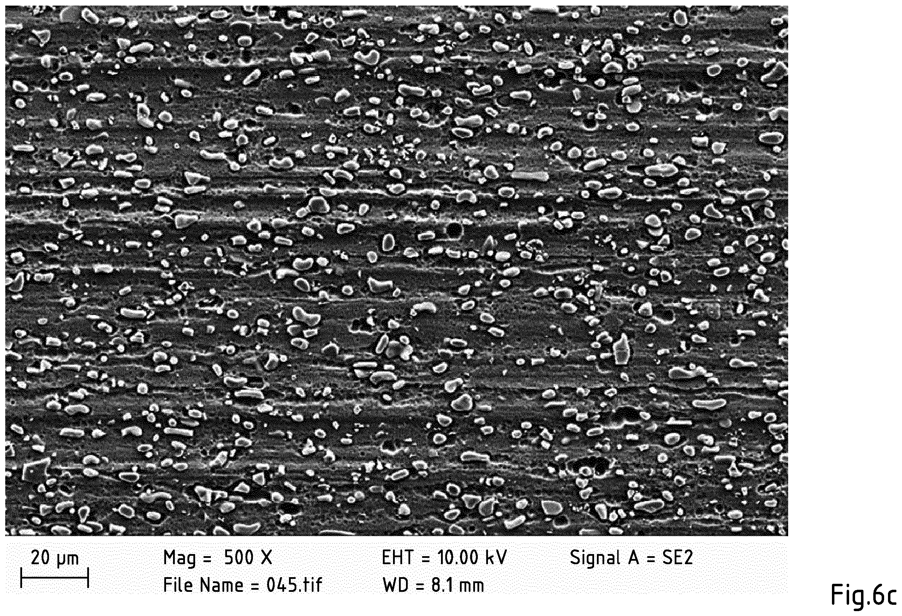

Fig. 6a) zeigt im Vergleich zur Fig. 5) zahlreiche, zumindest teilweise freiliegende Siliziumpartikel und zudem geätzte Vertiefungen auf der Oberfläche der Aluminiumlotschicht. Das Gleiche gilt auch für Fig. 6b) und Fig. 6c), wobei die Belegung der Oberflächen mit zumindest teilweise freiliegenden Siliziumpartikeln aufgrund des höheren Si-Gehaltes der Aluminiumlotschichten gegenüber Fig. 6a) bis hin zur Fig. 6c) ansteigt. Wie an den REM-Aufnahmen deutlich wird, wird durch das Beizen das Aluminium derart aufgelöst, dass auf der Oberfläche die in der Beize nicht löslichen Siliziumpartikel verbleiben. Es wird davon ausgegangen, dass die durch den Beizprozess hervorgerufene Erhöhung der Siliziumkonzentration in der Oberfläche beispielsweise durch

Anreicherung bis hin zum Freilegen einer Vielzahl von Siliziumpartikeln zu der deutlichen Verbesserung des Lötverhaltens des Aluminiumverbundwerkstoffes führt. Vorteilhaft wirkt sich zudem aus, dass die in Fig. 5 auf der Oberfläche vorhandene relativ dicke Aluminiumoxidschicht, welche sich durch die vorgelagerten Prozessschritte bildet, entfernt und durch eine neue, sehr dünne Aluminiumoxidschicht ersetzt wird. Im Unterschied zu Fig. 6a) und Fig. 6c) zeigt Fig. 6b) weniger tiefe, geätzte Mulden bei einer relativ hohen Anzahl an auf der Oberfläche zumindest teilweise freigelegten Siliziumpartikeln.

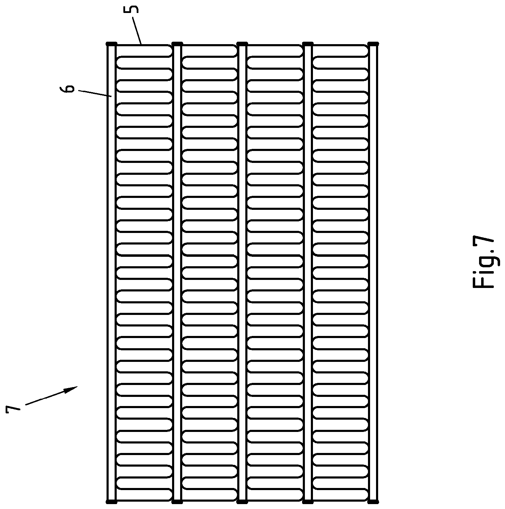

Mit der erfindungsgemäßen. Verwendung von einem Aluminiumverbundwerkstoff ist es damit erstmals gelungen, mit einfachen Aluminiumlotschichten und ohne die Verwendung von Flussmitteln prozesssicher eine Lötung im CAB-Verfahren herzustellen. Beispielsweise kann der erfindungsgemäß verwendete Aluminiumverbundwerkstoff vorteilhaft bei der Herstellung eines gelöteten-Wärmetauschers 7, wie er in Fig. 7 dargestellt ist, verwendet werden.

Die Lamellen 5 des Wärmetauschers bestehen üblicherweise aus blankem oder beidseitig mit einem Aluminiumlot beschichtetem Aluminiumlegierungsband. Die Lamellen 5 werden mäanderförmig gebogen an Rohre 6 gelötet, so dass eine Vielzahl an Lötverbindungen benötigt wird. Es ist daher besonders vorteilhaft die erfindungsgemäße Verwendung einzusetzen da sie besonders gute Lötergebnisse beim CAB-Lötverfahren auch ohne Flussmittel erzielt. Die so hergestellten Wärmetauscher haben trotz Verwendung des CAB-Lötverfahrens eine höhere Lebensdauer, da aggressive Flussmittelrückstände nicht mehr vorhanden sind.

Dies gilt selbstverständlich auch für andere üblicherweise unter Verwendung mit Flussmitteln gelötete Konstruktionen mit einem Aluminiumverbundwerkstoff.

## Patentansprüche

1. Verwendung eines bandförmigen Aluminiumverbundwerkstoffes zum flussmittelfreien Löten bestehend aus mindestens einer Aluminiumkernlegierung und mindestens einer ein- oder beidseitig auf der Aluminiumkernlegierung vorgesehenen, äußeren Lotschicht bestehend aus einer Aluminiumlotlegierung,
**dadurch gekennzeichnet, dass** eine Aluminiumlotlegierung vom Typ AA4343, AA4045 oder AA4047 verwendet wird, die Aluminiumlotschicht eine alkalisch gebeizte Oberfläche aufweist, wobei die verwendete alkalische Beize Natronlauge mit einer Konzentration von 0,2 - 5 Gew.-% aufweist, wobei das Beizen in-line mit dem letzten Kaltwalzschritt oder durch Verwendung eines Coil-to-Coil-Fertigungsschrittes erfolgt ist.

2. Verwendung nach Anspruch 1,
**dadurch gekennzeichnet, dass** die Oberfläche der Aluminiumlotschicht zusätzlich vor oder während des Beizens entfettet worden ist.

3. Verwendung nach Anspruch 1 oder 2,
**dadurch gekennzeichnet, dass** die gebeizte Oberfläche der Aluminiumlotschicht zumindest teilweise freiliegende oder freiliegende Siliziumpartikel aufweist.

4. Verwendung , nach einem der Ansprüche 1 bis 3,
**dadurch gekennzeichnet, dass** als Aluminiumkernlegierung eine Aluminiumlegierung vom Typ AA1xxx, AA2xxx, AA3xxx, AA5xxx oder AA6xxx vorgesehen ist.

5. Verwendung nach einem der Ansprüche 1 bis 4,
**dadurch gekennzeichnet, dass** der Aluminiumverbundwerkstoff vor dem Beizen weich- oder rückgeglüht ist.

6. Verwendung nach einem der Ansprüche 1 bis 5,
**dadurch gekennzeichnet, dass** der Aluminiumverbundwerkstoff durch simultanes Gießen oder Walzplattieren hergestellt ist.

7. Verwendung nach einem der Ansprüche 1 bis 6,
**dadurch gekennzeichnet, dass** der Aluminiumverbundwerkstoff vor dem Beizen oder während des Beizens mit einem Entfettungsmedium entfettet wird.

8. Verwendung nach einem der Ansprüche 1 bis 7,
**dadurch gekennzeichnet, dass** das Entfettungsmedium mindestens 0,5 - 3 Gew.-% eines Gemisches aus 5 - 40 Gew.-% Natriumtripolyphosphat, 3 - 10 Gew.-% Natriumgluconat, 3 - 8 Gew.-% nichtionischer und anionischer Tenside, optional 0,5 - 70 Gew.-% Natriumcarbonat, bevorzugt 30 - 70 Gew.-% Natriumcarbonat enthält.

9. Verwendung nach einem der Ansprüche 1 bis 8,
**dadurch gekennzeichnet, dass** die Verweildauer des Aluminiumlegierungsbandes in der Beize 1 bis 20 s, bevorzugt 2 bis 8 s beträgt.

10. Verwendung nach einem der Ansprüche 1 bis 9,
**dadurch gekennzeichnet, dass** die Temperatur der Beize 65 °C bis 80 °C beträgt.

11. Verwendung nach einem der Ansprüche 1 bis 10,
**dadurch gekennzeichnet, dass** eine saure Spülung unter Verwendung einer Salpetersäure oder einer Schwefelsäure erfolgt.

12. Verwendung nach einem der Ansprüche 1 bis 11,
**dadurch gekennzeichnet, dass** eine gelötete Konstruktion umfassend mindestens ein umgeformtes oder nicht umgeformtes Blech oder Rohr hergestellt wird.

## Claims

1. Use of a strip-shaped aluminium composite material for fluxless brazing consisting of at least one aluminium core alloy and at least one outer brazing layer consisting of an aluminium brazing alloy provided on one or both sides of the aluminium core alloy,
**characterized in that**
an aluminium brazing alloy of the type AA4343, AA4045 or AA4047 is used, and the aluminium brazing layer has a pickled surface, wherein the used alkaline pickling medium comprises sodium hydroxide with a concentration of 0.2 - 5 wt.-%, wherein the pickling has been carried out in-line with the last cold rolling step or by use of a coli-to-coil production step.

2. Use according to claim 1,
**characterized in that**
the surface of the aluminium brazing layer has additionally been degreased before or during the pickling.

3. Use according to claim 1 or 2,
**characterized in that**
the pickled surface of the aluminium brazing layer comprises at least partially exposed or exposed silicon particles.

4. Use according to one of claims 1 to 3,
**characterized in that**
an aluminium alloy of the type AA1xxx, AA2xxx, AA3xxx, AA5xxx or AA6xxx is provided as aluminium core alloy.

5. Use according to one of claims 1 to 4,
**characterized in that**
the aluminium composite material is soft annealed or re-annealed before the pickling.

6. Use according to one of claims 1 to 5,
**characterized in that**
the aluminium composite material is produced by simultaneous casting or roll cladding.

7. Use according to one of claims 1 to 6,
**characterized in that**
the aluminium composite material is degreased with a degreasing medium before the pickling or during the pickling.

8. Use according to one of claims 1 to 7,
**characterized in that**
the degreasing medium contains at least 0.5 - 3 wt.-% of a mixture of 5 - 40 wt.-% sodium tripolyphosphate, 3 - 10wt.-% sodium gluconate, 3 - 8wt.-% nonionic and anionic surfactants, and optionally 0.5 - 70 wt.-% sodium carbonate, preferably 30 - 70 wt.-% sodium carbonate.

9. Use according to one of claims 1 to 8,
**characterized in that**
the dwell time of the aluminium alloy strip in the pickling medium is 1 to 20 sec., preferably 2 to 8 sec.

10. Use according to one of claims 1 to 9,
**characterized in that**
the temperature of the pickling medium is 65 °C to 80 °C.

11. Use according to one of claims 1 to 10,
**characterized in that**
an acidic rinsing is carried out using a nitric acid or a sulphuric acid.

12. Use according to one of claims 1 to 11,
**characterized in that**
a brazed construction comprising at least one formed or non-formed metal sheet or tube is produced.

## Revendications

1. Utilisation d'un matériau composite en aluminium en forme de bande pour le brasage sans flux, constitué d'au moins un alliage de noyau d'aluminium et d'au moins une couche de brasage extérieure constituée d'un alliage de brasage d'aluminium prévue sur une ou deux faces de l'alliage de noyau d'aluminium,
**caractérisé en ce qu'**
un alliage de brasage d'aluminium du type AA4343, AA4045 ou AA4047 est utilisé, la couche de brasage d'aluminium présente une surface décapée en milieu alcalin, dans lequel la solution de décapage alcaline utilisée comporte soude caustique avec une concentration de 0,2 à 5 % en poids, dans lequel le décapage est effectué en ligne avec l'étape finale de laminage à froid ou en utilisant une étape de fabrication bobine-à-bobine.

2. Utilisation selon la revendication 1,
**caractérisé en ce que**
la surface de la couche de brasage d'aluminium a été dégraissée avant ou pendant le décapage.

3. Utilisation selon la revendication 1 ou 2,
**caractérisé en ce que**
la surface décapée de la couche de brasage d'aluminium présente des particules de silicium au moins partiellement exposées ou exposées.

4. Utilisation selon l'une des revendications 1 à 3,
**caractérisé en ce qu'**
un alliage d'aluminium de type AA1xxx, AA2xxx, AA3xxx, AA5xxx ou AA6xxx est prévu comme l'alliage de noyau d'aluminium.

5. Utilisation selon l'une des revendications 1 à 4,
**caractérisé en ce que**
le matériau composite en aluminium est recuit d'adoucissement ou recuit en retour avant le décapage.

6. Utilisation selon l'une des revendications 1 à 5,
**caractérisé en ce que**
le matériau composite en aluminium est produit par coulée simultanée ou par plaquage par laminage.

7. Utilisation selon l'une des revendications 1 à 6,
**caractérisé en ce que**
le matériau composite en aluminium est dégraissé avec un agent de dégraissage avant ou pendant le décapage

8. Utilisation selon l'une des revendications 1 à 7,
**caractérisé en ce que**
l'agent de dégraissage contient au moins 0,5 - 3 % en poids d'un mélange de 5 - 40 % en poids de tripolyphosphate de sodium, 3 - 10 % en poids de gluconate de sodium, 3 - 8 % en poids d'agents de surface non ioniques et anioniques, éventuellement 0,5 - 70 % en poids de carbonate de sodium, de préférence 30 - 70 % en poids de carbonate de sodium.

9. Utilisation selon l'une des revendications 1 à 8,
**caractérisé en ce que**
le temps de séjour de la bande d'alliage d'aluminium dans la solution de décapage est de 1 à 20 s, de préférence de 2 à 8 s.

10. Utilisation selon l'une des revendications 1 à 9,
**caractérisé en ce que**
la température de la solution de décapage est de 65°C à 80°C.

11. Utilisation selon l'une des revendications 1 à 10,
**caractérisé en ce qu'**
un rinçage acide est effectué en utilisant un acide nitrique ou un acide sulfurique.

12. Utilisation selon l'une des revendications 1 à 11,
**caractérisé en ce qu'**
une structure brasée comprenant au moins une tôle ou un tube formé ou non-formé est produite.
